# EUROPEAN PATENT APPLICATION

(11) **EP 2 902 990 A1**
(43) Date of publication of application: **05.08.2015**
(21) Application number: 15151703.4
(22) Date of filing: 19.01.2015
(51) Int. Cl.: G08G 5/00, G08G 5/06, G09B 29/00, G05D 1/00, G05D 1/02, G09B 29/10

(54) **Passive aircraft wingtip strike detection system and method**

(30) Priority: 30.01.2014 US 201461933335 P; 22.04.2014 US 201414258839
(71) Applicant: Honeywell International Inc., Morristown, NJ 07962-2245 (US)
(72) Inventor: Conner, Kevin J., Morristown, NJ 07962-2245 (US); Ishihara, Yasuo, Morristown, NJ 07962-2245 (US); Johnson, Steve, Morristown, NJ 07962-2245 (US); Berry, Ray, Morristown, NJ 07962-2245 (US)
(74) Representative: Houghton, Mark Phillip

(57) **Abstract**

A system and method for passively detecting aircraft wingtip strikes includes generating a digital base map represented by a plurality of aerodrome cells. A numeric value is assigned to each of the aerodrome cells that is representative of the specific wingtip strike threat associated with that aerodrome cell. An index count array is generated that has a separate entry for each numeric value. A digital aircraft structure is generated that is representative of an aircraft, and is represented by a plurality of aircraft cells. A portion of the aerodrome cells are replaced with the plurality of aircraft cells. Each numeric value of the aerodrome cells that are replaced is counted to determine a replacement count associated therewith and that is entered into the separate entry in the index count array for that numeric value. One or more potential aircraft wingtip strikes are detected based on the replacement counts.

## Description

### CROSS-REFERENCE TO RELATED APPLICATION

This application claims the benefit of U.S. Provisional Application No. 61/933,335 filed January 30, 2014.

### TECHNICAL FIELD

The present invention generally relates to aircraft wingtip strike prevention, and more particularly relates to systems and methods for passively detecting aircraft wingtip strikes.

### BACKGROUND

Aircraft pilots often maneuver an aircraft while on the ground. This may happen during ground operations such as when the aircraft is taxiing, being maneuvered to or from a hangar, or to or from a terminal.

Obstacles on the ground, such as structures, other vehicles and other obstacles, may lie in the path of the aircraft. These obstacles can be detected by the pilot via line of sight. However, in many instances, due to the dimensions of the aircraft (e.g., large wing sweep angles, distance from cockpit to wingtip) and the pilot's limited field of view, it can be difficult to monitor extremes of the aircraft during ground operations. As a result, the operator may fail to detect obstacles that are located in "blind spots" in proximity to the aircraft. In many cases, the pilot may not detect an obstacle until it is too late to take corrective action. To alleviate this, many aircraft include active sensors or cameras or to sense potential or imminent strikes.

Collisions with an obstacle can not only damage the aircraft, but can also put the aircraft out of service and result in flight cancellations. The costs associated with the repair and grounding of an aircraft are significant. As such, the timely detection and avoidance of obstacles that lie in the ground path of a vehicle is an important issue that needs to be addressed.

Currently, there is no economical system available to protect aircraft from wingtip strikes. As aircraft increase in size, the probability and cost of a strike incident increases. Therefore, there is a need for a system that can be retro-fitted onto aircraft with a minimum of effort, and that does not rely on active sensors or flight crew personnel. The present invention addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a method for passively detecting aircraft wingtip strikes includes generating a digital base map of at least a portion of an aerodrome that includes one or more specific wingtip strike threats, the digital base map represented by a plurality of aerodrome cells. A numeric value is assigned to each of the aerodrome cells. The numeric value assigned to each aerodrome cell is representative of the specific wingtip strike threat associated with that aerodrome cell. An index count array is generated. The index count array has a separate entry for each numeric value. A digital aircraft structure is generated that is representative of an aircraft, and is represented by a plurality of aircraft cells. A portion of the aerodrome cells are replaced with the plurality of aircraft cells. Each numeric value of the aerodrome cells that are replaced is counted to determine a replacement count associated therewith. The replacement count associated with each numeric value is entered into the separate entry in the index count array for that numeric value. One or more potential aircraft wingtip strikes are detected based on the replacement counts in the index count array.

In another embodiment, a passive aircraft wingtip strike detection system includes an aerodrome database and a processor. The aerodrome database has aerodrome data stored therein that includes data representative of specific wingtip strike threats. The processor is in operable communication with the aerodrome database. The processor is configured to selectively retrieve aerodrome data from the aerodrome database and, upon retrieval thereof to: generate a digital base map of at least a portion of an aerodrome that includes one or more specific wingtip strike threats, assign a numeric value to each of the aerodrome cells that is representative of the specific wingtip strike threat associated with that aerodrome cell, generate an index count array having a separate entry for each numeric value, generate a digital aircraft structure representative of an aircraft and that is represented by a plurality of aircraft cells, replace a portion of the aerodrome cells with the plurality of aircraft cells, count each numeric value of the aerodrome cells that are replaced to determine a replacement count associated therewith, enter the replacement count associated with each numeric value into the separate entry in the index count array for that numeric value, and detect one or more potential aircraft wingtip strikes based on the replacement counts in the index count array.

Furthermore, other desirable features and characteristics of the passive strike detection system and method will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 depicts a functional block diagram of an embodiment of a passive wingtip strike detection system;
FIG. 2 depicts a simplified representation of a digital base map with a digital aircraft structure disposed thereon;
FIG. 3 depicts, in flowchart form, an embodiment of a detection process that is implemented by the system of FIG. 1; and
FIGS. 4-6 depict a portion of the digital base map with a digital aircraft structure disposed thereon that is depicted in FIG. 2, to more clearly illustrate the process of FIG. 3.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

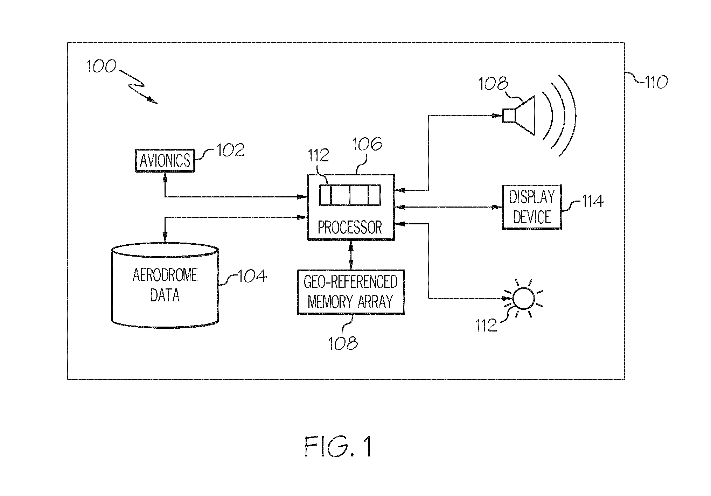

Referring first to FIG. 1, a functional block diagram of one embodiment of a passive wingtip strike detection system 100 is depicted. The depicted system 100 includes an avionics data source 102, an aerodrome database 104, and a processor 106, all disposed within an aircraft 110. The avionics data source 102 may be variously implemented, and may include any one of numerous known devices, subsystems, and sensors. Regardless of its implementation, the avionics data source 102 is configured to sense and supply aircraft data that are at least representative of aircraft position, aircraft speed, and aircraft orientation to the processor 106.

The aerodrome database 104 has aerodrome data stored therein. The aerodrome data are representative of various specific wingtip strike threats and various other aerodrome structures. As used herein, the term "specific wingtip strike threat" encompasses both the presence and absence of solid physical structure that an aircraft wing may strike. In particular, a specific wingtip strike encompasses an open region that includes no solid physical structure, as well as various physical structures present at an aerodrome. Such physical structures may include, for example, terminal buildings, non-terminal buildings, fixed obstacles (e.g., fences, posts, light poles, signage), and moving objects (e.g., baggage carts, other aircraft). The various other aerodrome structures may include, for example, runways and taxiways. The wingtip strike threats and other aerodrome structures may be variously represented. But in the depicted embodiment these entities are represented in the form of individual sections (or segments), lines, points, and circles, depending on the objects. Preferably, though not necessarily, the aerodrome data are stored in a relatively simple compressed format that can be easily and rapidly decompressed by the processor 106.

The processor 106 is in operable communication with the aerodrome database 104 and is configured to selectively retrieve aerodrome data therefrom. As may be appreciated, the aerodrome data that the processor 106 selectively retrieves are representative of the aerodrome at which the aircraft is presently located. As may also be appreciated, for those embodiments in which the aerodrome data are stored in a compressed format, the processor 106 generates the digital base map by decompressing the retrieved aerodrome data. The processor 106, upon retrieval of the aerodrome data, generates a digital base map of at least a portion of the aerodrome, which may include one or more terminal buildings, non-terminal buildings, fixed objects, and moving objects. In the depicted embodiment, the digital base map is copied to a geo-referenced memory array 108.

The processor 106 is also in operable communication with the avionics 102 and is coupled to receive the aircraft data therefrom. The processor 106 is configured, upon receipt of these data, to determine current aircraft position, speed, and orientation, and, at least in some embodiments, to predict future aircraft positions, speeds, and orientations. The processor 106 is additionally configured, upon receipt of the aircraft data, to generate a digital aircraft structure representative of the aircraft 110 and dispose the digital aircraft structure onto the digital base map. As will be described further below, the digital aircraft structure that the processor 106 generates includes a protective envelope around the aircraft.

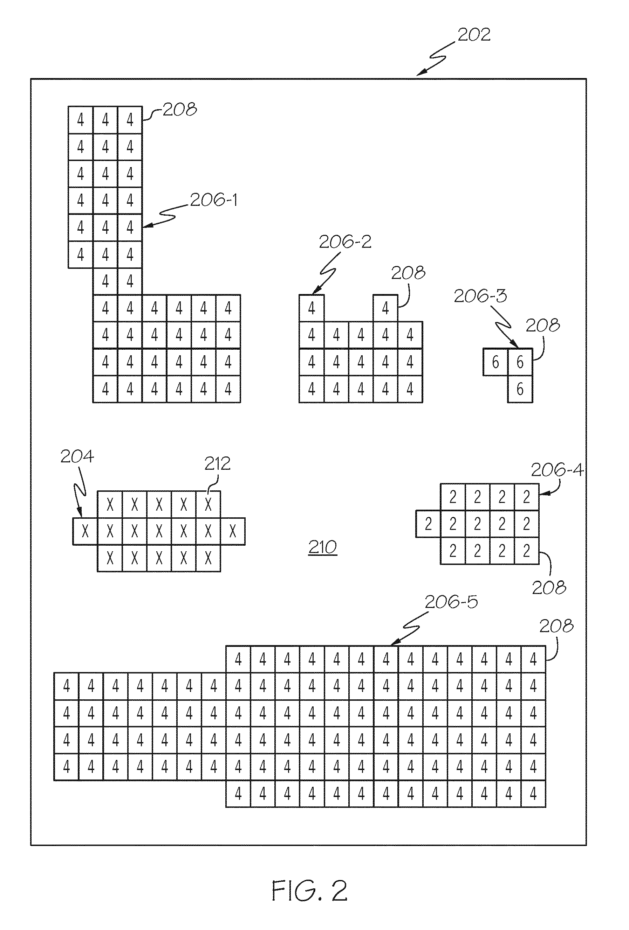

Referring now to FIG. 2, a simplified representation of a digital base map 202 with a digital aircraft structure 204 disposed thereon is depicted. The depicted digital base map 202 includes a plurality of specific wingtip strike threats 206. As previously noted, the term "specific wingtip strike threats" encompasses open regions, which include no solid physical structures, as well as various physical structures. As may be readily apparent, the depicted digital base map 202 includes five physical structures 206-1 through 206-5 disposed within an open region 210.

As FIG. 2 also depicts, the digital base map 202 and the digital aircraft structure 204 are each represented by a plurality of cells. In particular, the digital base map 202 that is generated is represented by a plurality of aerodrome cells 208, and the digital aircraft structure 204 that is generated is represented by a plurality of aircraft cells 212. It is noted that for clarity, each aerodrome cell 208 and each aircraft cell 212 are not illustrated with an associated reference numeral. Moreover, for ease of distinction, the aircraft cells 212 are illustrated with an "X" therein.

The processor 106, in addition to generating the digital base map 202 with an overlain digital aircraft structure 204, is configured to assign a numeric value to each of the aerodrome cells 208 and to generate an index count array 112 (see FIG. 1) that has a separate entry for each numeric value. The numeric value that the processor 106 assigns to each aerodrome cell 208 is representative of the specific wingtip strike threat associated with that aerodrome cell 208. It will be appreciated that the numeric values used may be varied, but in the depicted embodiment a zero (0) is assigned to each aerodrome cell 208 associated with an open space 210, and a non-zero numeric value is assigned to each aerodrome cell 208 associated with a physical structure 206-1 through 206-5. The same non-zero numeric value could be assigned to all aerodrome cells 208 associated with a physical structure, but in the depicted embodiment a different non-zero numeric value for different types of physical structures. For example, aerodrome cells 208 associated with non-terminal buildings (i.e., 206-4) are assigned a numeric value of two (2), aerodrome cells 208 associated with terminal buildings (i.e., 206-1, 206-2, 206-5) are assigned a numeric value of four (4), and aerodrome cells 208 associated with moving objects (i.e., 206-3) are assigned a numeric value of six (6).

Referring back to FIG. 1, it is seen that the index count array 112 comprises a plurality of entries. In particular, it includes at least a separate entry for each numeric value that is assignable to an aerodrome cell 208. As already noted, the assignable numeric values may vary. In addition, the number of assignable numeric values may vary, depending upon the different types of physical structures that are being categorized. In the depicted embodiment, three different types of physical structures are categorized, and thus the index count array 112 includes four separate entries. It will be appreciated that the index count array 112 could include more or less than this number of entries, but as a minimum will include two separate entries. The purpose and functionality of the index count array 112 and its associated entries will be described further below.

Referring once again to FIG. 2, it was previously noted that the digital aircraft structure 204 that the processor 106 generates includes a protective envelope around the aircraft. The protective envelope may be, for example, a simple circle (or other geometric shape) that surrounds the aircraft. If implemented as a circle, the radius of the circle is preferably set to cover the entire aircraft, and may additionally include a buffer or error budget, as needed or desired. As an example, if the aircraft has a 40 meter wingspan, the envelope could be set to 45 meters, allowing for a 5 meter buffer. In some embodiments, the size of the envelope may vary based on detected aircraft speed. Moreover, the envelope is applied at not only the current aircraft position, but is(are) "walked" along the predicted future aircraft positions, as described above. It should be noted that the predicted future positions preferably include pilot reaction time and stopping time.

The processor 106 is configured, based on the retrieved aerodrome data and on the current and future aircraft positions, speeds and orientations, to implement a passive wingtip strike threat detection process. This detection process, which will now be described in more detail, is based on the content of the index count array 112, and more specifically the content of each entry in the index count array 112. This is because the content of each entry in the index count array 112 varies based on the number aerodrome cells 208 of a specific numeric value that are replaced by an aircraft cell 212.

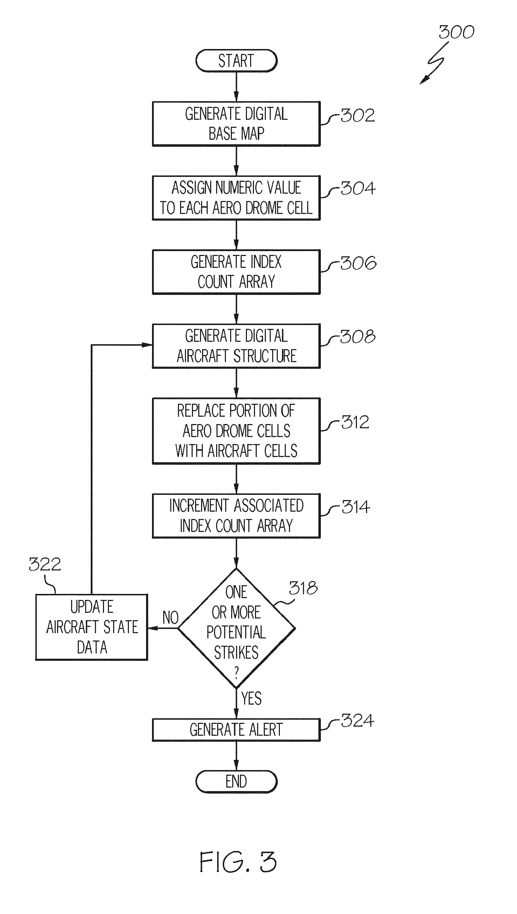

Reference should now be made to FIG. 3, which depicts, in flowchart form, an embodiment of the detection process 300 that is implemented by the processor 106. The process 300 begins when the processor 106 retrieves appropriate aerodrome data from the aerodrome database 104 and generates a digital base map 202 of at least a portion of an aerodrome that includes one or more specific wingtip strike threats 206 (302). A numeric value is assigned to each of the aerodrome cells 208 (304) and the index count array 112 is generated (306). As previously noted, the assigned numeric values are representative of the specific wingtip strike threat associated with that aerodrome cell 208.

The digital aircraft structure 204, which is represented by a plurality of aircraft cells 212, is also generated (308), and a portion of the aerodrome cells 208 are replaced with the plurality of aircraft cells 212 (312). Each numeric value of the aerodrome cells 208 that are replaced has its associated index count array entry incremented (314). More specifically, each numeric value of the aerodrome cells 208 that are replaced is counted to determine an associated replacement count, and the replacement count associated with each numeric value is then entered into the separate entry in the index count array for that numeric value. A determination is then made whether one or more potential aircraft wingtip strikes is detected based on the replacement counts in the index count array 112 (318). If no strikes are detected, the aircraft state data are updated (322) and a portion of the process repeats (308-318). If a strike is detected, an alert is generated (324).

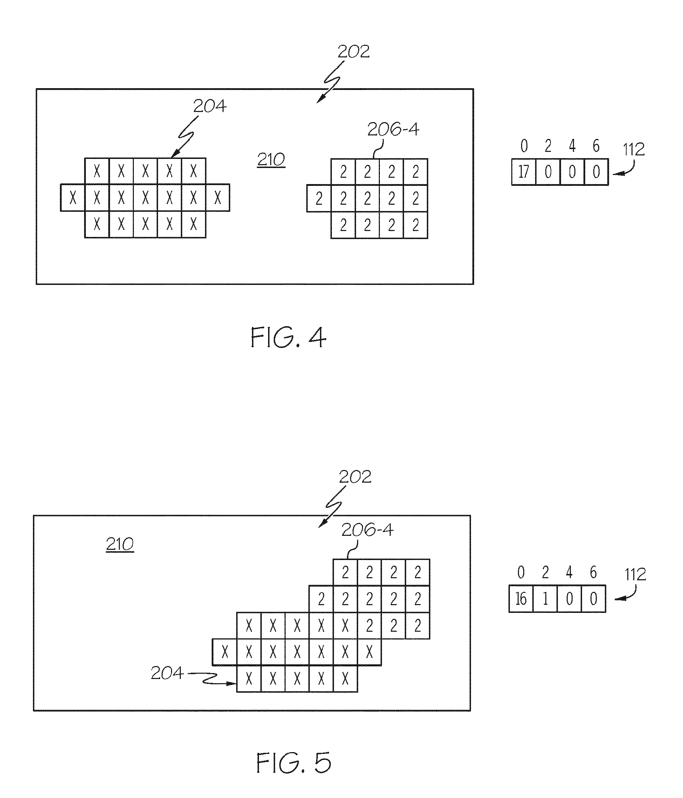

To more clearly illustrate the above-described process, reference should be made to FIGS. 4-6, which depict only a portion of the digital base map 202 with the digital aircraft structure 204 disposed thereon. For clarity and ease of depiction and description, the digital base map 202 that is depicted includes only one physical structure, in this case a non-terminal building 206-4 that comprises 13 aerodrome cells 208, and that is surrounded by open space 210. Moreover, the digital aircraft structure 204 is depicted as comprising 17 aircraft cells 212.

At the point in time illustrated in FIG. 4, all 17 aircraft cells 212 have replaced only open space aerodrome cells 208 (numeric value of 0), and none of the other types of aerodrome cells 208 (numeric values of 2, 4, and 6). Thus, the replacement counts associated with each numeric value, and the concomitant entries in the index count array 112 are: 0:17, 2:0, 4:0, 6:0. Based on the replacement counts in the index count array, no potential aircraft wingtip strikes are detected.

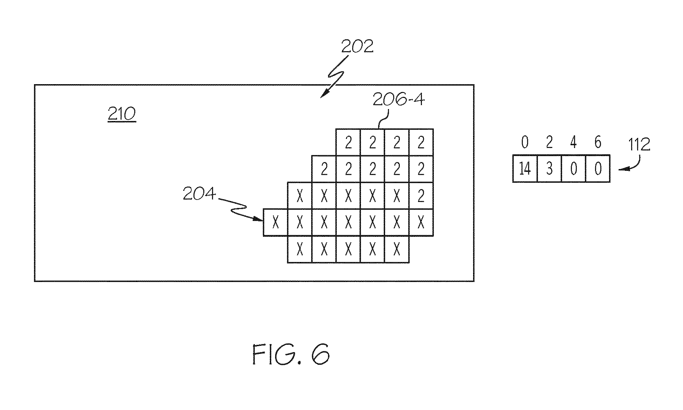

As the aircraft moves along its actual or predicted path, the entries in the index count array will remain the same as depicted in FIG. 4, until the point in time depicted in FIG. 5. At that point, 16 of the aircraft cells 212 have replaced open space aerodrome cells 208, and 1 of the aircraft cells 212 has replaced one of the non-terminal building aerodrome cells 208. Thus, the replacement counts associated with each numeric value, and the concomitant entries in the index count array are: 0:16, 2:1, 4:0, 6:0. Based on the replacement counts in the index count array, a potential aircraft wingtip strike is detected. The process 300 could stop at this point, but if it continues on to the point in time depicted in FIG. 6, 14 of the aircraft cells 212 have replaced open space aerodrome cells 208, and 3 of the aircraft cells 212 have replaced one of the non-terminal building aerodrome cells 208. Thus, the replacement counts associated with each numeric value, and the concomitant entries in the index count array are: 0:14, 2:3, 4:0, 6:0.

It is noted that if there is only one type of threat being protected against, the process 300 may stop as soon as a potential aircraft wingtip strike is detected. If multiple threats are being protected against, then the entire digital aircraft structure 204 can be rendered onto the digital working map 202. Moreover, whether the processor 106 detects one or multiple threats, it will generate one or more alert signals. Returning to FIG. 1, the alert signals are supplied at least to an aural alert device 108, such as a speaker, but may additionally or instead be supplied to a visual alert device 112, such as a lamp. In some embodiments, the processor 106 may also command a display device 114 to render images similar to those depicted in FIGS. 4-6.

The system and method described herein provides a passive system that utilizes a database or map of airport/aerodrome structures that are potential collision hazards. In essence, a "graphical" threat detection approach is implemented that is relatively insensitive to the complexity of aerodrome geometry and eliminates the need for conventional wingtip strike sensors. Although sensors may still be needed in tight spaces such as gates, the system and method disclosed herein provides adequate protection from fixed obstacles.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, i.e., memory elements, digital signal processing elements, logic elements, or look-up tables, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, i.e., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC.

In this document, relational terms such as first and second, and the like may be used solely to distinguish one entity or action from another entity or action without necessarily requiring or implying any actual such relationship or order between such entities or actions. Numeric ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A passive aircraft wingtip strike detection system, comprising:
an aerodrome database having aerodrome data stored therein, the aerodrome data including data representative of specific wingtip strike threats; and
a processor in operable communication with the aerodrome database, the processor configured to selectively retrieve aerodrome data from the aerodrome database and, upon retrieval thereof to:
generate a digital base map of at least a portion of an aerodrome that includes one or more specific wingtip strike threats, the digital base map represented by a plurality of aerodrome cells;
assign a numeric value to each of the aerodrome cells, the numeric value assigned to each aerodrome cell representative of the specific wingtip strike threat associated with that aerodrome cell;
generate an index count array, the index count array having a separate entry for each numeric value;
generate a digital aircraft structure representative of an aircraft, the digital aircraft structure represented by a plurality of aircraft cells;
replace a portion of the aerodrome cells with the plurality of aircraft cells;
count each numeric value of the aerodrome cells that are replaced to determine a replacement count associated therewith;
enter the replacement count associated with each numeric value into the separate entry in the index count array for that numeric value; and
detect one or more potential aircraft wingtip strikes based on the replacement counts in the index count array.

2. The system of claim 11, wherein the digital aircraft structure comprises a protective envelope around the aircraft.

3. The system of claim 2, wherein:
the protective envelope has a size;
processor is adapted to receive data representative of aircraft speed; and
the processor is further configured to vary the size of the protective envelope based on the aircraft speed.

4. The system of claim 1, wherein:
the processor is adapted to receive aircraft location data and is configured, upon receipt thereof, to determine current location of the aircraft and replace the portion of the aerodrome cells with the plurality of aircraft cells at the current location; and
the processor is further configured to predict a plurality of future locations of the aircraft and replace the portion of the aerodrome cells with the plurality of aircraft cells at each of the plurality of future locations.

5. The system of claim 1, wherein:
the processor is further configured to selectively supply an alert signal based on the one or more potential aircraft wingtip strikes that are detected; and
the system further comprises an alert device coupled to receive the alert signal and configured, in response thereto, to generate an alert.

6. The system of claim 1, wherein the one or more specific wingtip strike threats comprise:
an open region;
a terminal building;
a non-terminal building;
a fixed obstacle; and
a moving object.

7. The system of claim 6, wherein:
the processor is further configured to determine when the one or more potential wingtip strikes include a specific wingtip strike threat that is not an open region and upon making this determination, generate an alert signal based on the specific wingtip strike threat; and
the system further comprises an alert device coupled to receive the alert signal and configured, in response thereto, to generate an alert.

8. The system of claim 1, wherein:
the retrieved aerodrome data are compressed aerodrome data; and
the processor is further configured to decompress the retrieved aerodrome data and copy the decompressed aerodrome data into a geo-referenced memory array.

9. The system of claim 1, further comprising:
a display device coupled to receive image rendering display commands and configured, upon receipt of the image rendering display commands, to render images,
wherein the processor is further configured to selectively supply image rendering display commands to the display device that cause the display device to render images of the digital base map and the digital aircraft structure.

10. A method for passively detecting aircraft wingtip strikes, comprising the steps of:
in a processing system:
generating a digital base map of at least a portion of an aerodrome that includes one or more specific wingtip strike threats, the digital base map represented by a plurality of aerodrome cells;
assigning a numeric value to each of the aerodrome cells, the numeric value assigned to each aerodrome cell representative of the specific wingtip strike threat associated with that aerodrome cell;
generating an index count array, the index count array having a separate entry for each numeric value;
generating a digital aircraft structure representative of an aircraft, the digital aircraft structure represented by a plurality of aircraft cells;
replacing a portion of the aerodrome cells with the plurality of aircraft cells;
counting each numeric value of the aerodrome cells that are replaced to determine a replacement count associated therewith;
entering the replacement count associated with each numeric value into the separate entry in the index count array for that numeric value;
detecting one or more potential aircraft wingtip strikes based on the replacement counts in the index count array.
